# EUROPÄISCHE PATENTANMELDUNG

(11) **EP 3 703 161 A1**
(43) Veröffentlichungstag der Anmeldung: **02.09.2020**
(21) Anmeldenummer: 19159989.3
(22) Anmeldetag: 28.02.2019
(51) Int. Cl.: H01M 4/133

(54) **WIEDERAUFLADBARE BATTERIEZELLE MIT EINEM AKTIVEN ELEKTRODENDEPOLARISATOR**

(71) Anmelder: Innolith Technology AG, 4052 Basel (CH)
(72) Erfinder: PSZOLLA, Christian, 76185 Karlsruhe (DE); RAMAR, Vishwanathan, 69126 Heidelberg (DE); ZINCK, Laurent, 67470 Mothern (FR); BORCK, Markus, 70567 Stuttgart (DE)
(74) Vertreter: Lemcke, Brommer & Partner Patentanwälte Partnerschaft mbB

(57) **Zusammenfassung**

Vorgeschlagen wird eine wiederaufladbare Batteriezelle mit einem Gehäuse (1), zumindest einer positiven Elektrode (4), zumindest einer negativen Elektrode (5) und einem aktiven Elektrodendepolarisator, welcher aus einem auf Schwefeldioxid-basierenden Elektrolyten ausgebildet ist, wobei die positive Elektrode (4) Kohlenstoff enthält und eine Dicke von mindestens 0,2 mm, bevorzugt mindestens 0,4 mm, weiter bevorzugt mindestens 0,6 mm, weiter bevorzugt mindestens 0,8 mm, weiter bevorzugt mindestens 1,0 mm, weiter bevorzugt mindestens 1,5 mm, weiter bevorzugt mindestens 2,0 mm und besonders bevorzugt mindestens 4,0 mm aufweist.

## Beschreibung

Die Erfindung betrifft eine wiederaufladbare Batteriezelle mit einem Gehäuse, zumindest einer positiven Elektrode, zumindest einer negativen Elektrode und einem aktiven Elektrodendepolarisator, welcher aus einem auf Schwefeldioxidbasierenden Elektrolyten gebildet ist.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-lonen-Zellen bezeichnet.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur besitzen, in welche Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können. Die negative Elektrode von Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die positive Elektrode besteht aus Lithiumkobaltoxid (LiCoO₂), welches auf ein Ableitelement aus Aluminium aufgetragen ist. Beide Elektroden weisen eine Dicke von in der Regel weniger als 100 µm auf und sind daher sehr dünn ausgebildet. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Der Transport der Ionen zwischen den Elektroden erfolgt mittels des Elektrolyten, der die erforderliche lonenbeweglichkeit gewährleistet. Die aus dem Stand der Technik bekannten Lithium-Ionen-Zellen enthalten einen Elektrolyten, der aus einem in einem organischen Lösungsmittel oder Lösungsmittelgemisch gelöstem Leitsalz besteht. Bei dem Leitsalz handelt es sich um ein Lithiumsalz wie beispielsweise Lithiumhexafluorophosphat (LiPF₆). Das Lösungsmittelgemisch kann beispielsweise Ethylencarbonat enthalten. Aufgrund des organischen Lösungsmittels oder Lösungsmittelgemischs werden derartige Lithium-Ionen-Zellen auch als organische Lithium-Ionen-Zellen bezeichnet.

Problematisch sind organische Lithium-Ionen-Zellen hinsichtlich ihrer Stabilität sowie langfristigen Betriebssicherheit. Sicherheitsrisiken werden insbesondere durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Die zuvor beschriebenen Probleme im Hinblick auf die Stabilität und die langfristige Betriebssicherheit sind besonders schwerwiegend bei der Entwicklung von organischen Lithium-Ionen-Zellen für Hochenergieanwendungen. Als Hochenergiezellen werden wiederaufladbare Batteriezellen bezeichnet, die eine spezifische Kapazität von mehr als 500 mAh/g bis über 1000 mAh/g und eine Energiedichte von ungefähr 300 Wh/kg bis 1500 Wh/kg aufweisen.

Eine aus dem Stand der Technik bekannte Weiterentwicklung sieht daher die Verwendung eines Elektrolyten auf Schwefeldioxid (SO₂)-Basis anstatt eines organischen Elektrolyten für wiederaufladbare Batteriezellen vor. Wiederaufladbare Batteriezellen, welche einen auf SO₂-basierenden Elektrolyten enthalten, weisen unter anderem eine hohe ionische Leitfähigkeit auf. Unter dem Begriff "auf SO₂-basierender Elektrolyt" ist ein Elektrolyt zu verstehen, der SO₂ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch SO₂ gewährleistet ist. Derartige Elektrolyten auf SO₂-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Die EP 2 534 719 B1 offenbart beispielsweise eine wiederaufladbare Batteriezelle mit einem Gehäuse, einer positiven Elektrode, einer negativen Elektrode sowie einem Elektrolyten. Der Elektrolyt dieser wiederaufladbaren Batteriezelle basiert auf SO₂ und enthält ein Leitsalz. Ein aktives Material der positiven Elektrode, welches zumindest teilweise für die Energiespeicherung in dieser wiederaufladbaren Batteriezelle verantwortlich ist, besteht aus einem Lithiummetallphosphat in Form von Lithiumeisenphosphat (LiFePO₄). Mit dieser wiederaufladbaren Batteriezelle kann eine spezifische Kapazität von beispielsweise 155 mAh/g bei einer 1C-Entladung erreicht werden. Mit einer Entladerate von 1C wird definitionsgemäß die Nennkapazität einer Zelle in einer Stunde entladen. Weiterhin sind auch Lithiummetalloxide als aktives Material der positiven Elektrode in solchen wiederaufladbaren Batteriezellen bekannt.

Neben derartigen wiederaufladbaren Batteriezellen, welche den auf SO₂-basierenden Elektrolyten sowie Lithiummetallphosphat oder Lithiummetalloxid als aktives Material der positiven Elektrode enthalten, sind auch wiederaufladbare Batteriezellen bekannt, in denen SO₂ nicht nur Bestandteil des Elektrolyten ist, sondern zusammen mit dem Leitsalz einen aktiven Elektrodendepolarisator ausbildet. Derartige wiederaufladbaren Batteriezellen werden im nachfolgenden als wiederaufladbare Li-SO₂-Batteriezellen bezeichnet. Unter einem aktiven Elektrodendepolarisator wird eine Komponente der wiederaufladbare Li-SO₂-Batteriezellen verstanden, welche als aktives Elektrodenmaterial dient, das während der Entladung der wiederaufladbare Li-SO₂-Batteriezellen zu zumindest einem Entladeprodukt reduziert wird. Dieses Entladeprodukt wird während des Ladevorgangs der wiederaufladbaren Li-SO₂-Batteriezelle wieder in seinen Ursprungszustand vor dem Entladevorgang (rück-)oxidiert.

Beispielsweise sind derartige wiederaufladbare Li-SO₂-Batteriezellen mit einem aktiven Elektrodendepolarisator bekannt, der aus einem auf SO₂-basierenden Elektrolyten der Zusammensetzung LiAlCl₄. 6 SO₂ ausgebildet ist. Diese wiederaufladbare Li-SO₂-Batteriezellen zeigen eine Energiedichte von 134 Wh/kg und eine theoretische Kapazität des auf SO₂-basierenden Elektrolyten von ungefähr 144 mAh/g. Hierzu beschrieb Duracell in der nachfolgend genannten Veröffentlichung die Performance eines Prototyps einer wiederaufladbaren Li-SO₂-Batteriezelle, welche eine Batteriegröße im C-size Format aufwies:
Dey, A. N., Kuo, H. C., Piliero, P. & Kallianidis, M. "Inorganic electrolyte Li/SO2 rechargeable system: development of a prototype hermetic C cell and evaluation of its performance and safety characteristics. " J. Electrochem. Soc. 135, 2115-2120 (1988).

Ein wichtiger Vorteil von wiederaufladbaren Li-SO₂-Batteriezellen ist eine hohe Leitfähigkeit des auf SO₂-basierenden Elektrolyten, welcher Leitfähigkeiten von ca. 0.1 S/cm bei Raumtemperatur aufweist. Diese hervorragende Leitfähigkeit ermöglicht gute Leistungsdaten bzw. eine gute Performance der wiederaufladbaren Li-SO₂-Batteriezellen, wie beispielsweise ein geringer Widerstand oder eine Schnellladefähigkeit solcher Li-SO₂-Batteriezellen.

Um die Einsatzmöglichkeiten von wiederaufladbaren Batteriezellen zu erweitern sowie deren Eigenschaften zu verbessern, liegt der vorliegenden Erfindung die Aufgabe zugrunde, eine wiederaufladbare Batteriezelle anzugeben, welche gegenüber den aus dem Stand der Technik bekannten wiederaufladbaren Li-SO₂-Batteriezellen sowie den organischen Lithium-Ionen-Zellen
- verbesserte elektrische Leistungsdaten, insbesondere eine hohe Energiedichte und eine geringere Selbstentladung,
- eine gesteigerte Lebensdauer, insbesondere eine hohe Zahl nutzbarer Lade- und Entladezyklen,
- ein verringertes Gesamtgewicht,
- eine erhöhte Betriebssicherheit, auch unter den erschwerten Umweltbedingungen in einem Fahrzeug,
- verringerte Produktionskosten im Hinblick auf die notwendigen Ausgangsmaterialien und das Produktionsverfahren, sowie
- eine verbesserte Überladefähigkeit und Tiefentladefähigkeit aufweist.
Derartige wiederaufladbare Batteriezelle sollen insbesondere auch für Hochenergieanwendungen geeignet sein. Als wiederaufladbare Hochenergie-Batteriezellen im Sinne der vorliegenden Erfindung werden wiederaufladbare Batteriezellen bezeichnet, die eine spezifische Kapazität von mehr als 500 mAh/g, bevorzugt mehr als 750 mAh/g und weiter bevorzugt mehr als 1000 mAh/g aufweisen. Die Energiedichten von Hochenergiezellen können bei 300 Wh/kg, bevorzugt bei 500 Wh/kg, weiter bevorzugt bei 100 Wh/kg und besonders bevorzugt bei 1500 Wh/kg liegen.

Gelöst wird diese Aufgabe durch eine wiederaufladbare Batteriezelle mit den Merkmalen der Ansprüche 1, 2 und 3. Vorteilhafte Ausgestaltungen und Weiterbildungen sind in den Ansprüchen 4 bis 14 definiert.

Eine wiederaufladbare Batteriezelle umfasst in einem ersten Aspekt der Erfindung ein Gehäuse, zumindest eine positive Elektrode, zumindest eine negative Elektrode und einen aktiven Elektrodendepolarisator, welcher aus einem auf SO₂-basierenden Elektrolyten gebildet ist. Die positive Elektrode enthält Kohlenstoff und weist eine Dicke von mindestens 0,2 mm auf. Sie kann vorzugsweise auch eine Dicke von mindestens 0,4 mm, weiter bevorzugt mindestens 0,6 mm, weiter bevorzugt mindestens 0,8 mm, weiter bevorzugt mindestens 1,0 mm, weiter bevorzugt mindestens 1,5 mm, weiter bevorzugt mindestens 2,0 mm und besonders bevorzugt mindestens 4,0 mm aufweisen. Die Dicke der positiven Elektrode ist im Vergleich zu der Dicke, welche für die aus dem Stand der Technik bekannten positiven Elektroden von wiederaufladbaren Lithium-SO₂-Zellen sowie organischen Lithium-Ionen-Zellen, deutlich größer. Die Dicke der positiven Elektrode der erfindungsgemäßen wiederaufladbaren Batteriezelle sollte vorzugsweise jedoch einen maximalen Wert von 20,0 mm, bevorzugt von 15,0 mm nicht überschreiten.

Der aktive Elektrodendepolarisator ist, wie bereits zuvor beschrieben, aus dem auf SO₂-basierenden Elektrolyten gebildet bzw. setzt sich aus dieser Komponente der wiederaufladbaren Batteriezelle zusammen. Er dient einerseits als aktives Material und ist somit an den an und/oder in der positiven Elektrode ablaufenden Elektrodenprozessen unmittelbar beteiligt. Diese Elektrodenprozesse umfassen die Reduktion des aktiven Elektrodendepolarisators in zumindest ein Entladeprodukt während der Entladung der wiederaufladbaren Batteriezelle und die (Re-)Oxidation dieses zumindest einen Entladeprodukts während des Ladevorgangs der wiederaufladbaren Batteriezelle. Diese Oxidations-Reduktions-Reaktion kann selbstverständlich reversibel und wiederholbar in der wiederaufladbaren Batteriezelle stattfinden, wodurch die Wiederaufladbarkeit sowie die Langzeitstabilität der wiederaufladbaren Batteriezelle gewährleistet wird. Somit kann unter Verwendung eines aktiven Elektrodendepolarisators auf ein zusätzliches aktives Material der positiven Elektrode in Form von beispielsweise Lithiummetallphosphat oder Lithiummetalloxid, welches in die positive Elektrode eingebracht werden müsste, zumindest teilweise oder sogar vollständig verzichtet werden. Hierdurch können die Herstellbarkeit der wiederaufladbaren Batteriezelle verbessert und die Produktionskosten gesenkt werden.

Unter dem Begriff "zumindest ein Entladeprodukt" ist im Sinne der vorliegenden Erfindung zu verstehen, dass durch die an der positiven Elektrode während der Entladung ablaufende Reduktionsreaktion entweder ein oder auch mehrere voneinander verschiedene Entladeprodukte gebildet werden können, welche wiederum während des Ladevorgangs (rück-)oxidiert werden können, um die Wiederaufladbarkeit der Batteriezelle zu gewährleisten.

Der aktive Elektrodendepolarisator liegt im Wesentlichen flüssig in der wiederaufladbaren Batteriezelle vor. Im Wesentlichen flüssig bedeutet, dass es durch die an der positiven Elektrode stattfindenden Oxidations-Reduktions-Reaktion im Betrieb der wiederaufladbaren Batteriezelle zur Bildung von festen Reaktionsprodukten des aktiven Elektrodendepolarisators kommen kann, welche sich an oder in der positiven Elektrode niederschlagen bzw. ablagern können. Diese festen Reaktionsprodukte können sich dabei flächig in Form eines Films bzw. einer Beschichtung auf und/oder in der positiven Elektrode ablagern. Andererseits ermöglicht der aktive Elektrodendepolarisator, da er aus dem auf SO₂-basierende Elektrolyten gebildet ist, auch den Ladungstransport zwischen den Elektroden und gewährleistet die lonenbeweglichkeit. Der auf SO₂-basierende Elektrolyt enthält zu diesem Zweck SO₂ in einer Konzentration, bei der die lonenbeweglichkeit der Ionen eines Leitsalzes, das in dem Elektrolyten enthalten ist und den Ladungstransport bewirkt, zumindest teilweise, größtenteils oder sogar vollständig durch das SO₂ gewährleistet ist.

In einem zweiten Aspekt der Erfindung umfasst die wiederaufladbare Batteriezelle ebenfalls ein Gehäuse, zumindest eine positive Elektrode, zumindest eine negative Elektrode und einen aktiven Elektrodendepolarisator, welcher aus einem auf SO₂-basierenden Elektrolyten ausgebildet ist. Es ist hierbei jedoch wesentlich, dass die positive Elektrode neben Kohlenstoff mindestens ein weiteres chemisches Element oder mindestens eine das chemische Element enthaltende Verbindung in Form eines Metalloxids umfasst. Das chemische Element ist dabei ausgewählt aus der Gruppe, die gebildet wird von Vanadium, Nickel, Kupfer, Magnesium, Mangan, Titan, Aluminium, Blei, Palladium, Wolfram und Chrom. Das weitere chemische Element oder die das chemische Element enthaltende Verbindung liegen in der positiven Elektrode in einer Konzentration von 1 bis 20 Gewichtsprozent (Gew%), bevorzugt 5 bis 15 Gew% bezogen auf das Gesamtgewicht des Kohlenstoffs der Elektrode vor. Das weitere chemische Element oder die weitere Verbindung dienen als Katalysator, welcher die Oxidations-Reduktions-Reaktion des aktiven Elektrodendepolarisators an der positiven Elektrode unterstützt bzw. fördert und somit die Leistungsdaten der wiederaufladbaren Batteriezelle verbessert. Beispielsweise kann das weitere chemische Element oder die weitere Verbindung (der Katalysator) als Beschichtung auf dem Kohlenstoff vorliegen. In einer weiteren Ausführungsform kann das weitere chemische Element oder die weitere Verbindung zusammen mit dem Kohlenstoff eine Mischung bilden. Beispielsweise kann die positive Elektrode zusätzlich zu Kohlenstoff 5 Gew% Vanadiumoxid (V₂O₅) enthalten. V₂O₅ ist bereits als Katalysator in der Redoxchemie von SO₂ bekannt.

In einem dritten Aspekt der Erfindung umfasst die wiederaufladbare Batteriezelle ebenfalls ein Gehäuse, zumindest eine positive Elektrode, zumindest eine negative Elektrode und einen aktiven Elektrodendepolarisator, welcher aus einem auf SO₂-basierenden Elektrolyten gebildet ist. Es ist hierbei jedoch wesentlich, dass die positive Elektrode ein Ableitelement mit einer dreidimensionalen porösen Metallstruktur, insbesondere in Form eines Metallschaums, aufweist. Diese poröse Metallstruktur erstreckt sich dabei über mindestens 70 %, jedoch vorzugsweise über mindestens 80 % und weiter bevorzugt über mindestens 90% der Dicke der positiven Elektrode. Der Begriff "dreidimensionale poröse Metallstruktur" bezeichnet dabei jede aus Metall bestehende Struktur, die sich nicht nur wie ein dünnes Blech über die Länge und die Breite der flächigen Elektrode erstreckt, sondern auch über deren Dickendimension. Der flüssige aktive Elektrodendepolarisator kann in die Poren der dreidimensionalen porösen Metallstruktur eindringen und dadurch die Poren teilweise oder sogar vollständig ausfüllen. Das Ableitelement dient dazu, den erforderlichen elektronisch leitenden Anschluss des aktiven Elektrodenpolarisators, der sich in den Poren und an der Oberfläche der positiven Elektrode befindet, sowie dessen Reduktions- und Oxidationsprodukte zu gewährleisten. Somit verbessert das Ableitelement mit seiner dreidimensionalen porösen Metallstruktur die Leistungsdaten der wiederaufladbaren Batteriezelle. Die dreidimensionale poröse Metallstruktur kann auch als Metallvlies oder Metallgewebe ausgebildet sein.

Es liegt hierbei im Rahmen der Erfindung, dass zumindest ein Material, wie beispielsweise Kohlenstoff, in die Poren der dreidimensionalen porösen Metallstruktur eingearbeitet werden kann, welches die Oxidations-Reduktions-Reaktion des aktiven Elektrodendepolarisators an der positiven Elektrode katalysiert. Dieses Material ist vorzugsweise ebenfalls porös, sodass der aktive Elektrodendepolarisator nicht nur in die Poren der dreidimensionalen porösen Metallstruktur, sondern auch in die Poren dieses Materials eindringen kann. Die Menge an eingearbeitetem Material wird im Rahmen der vorliegenden Erfindung auch als Beladung der positiven Elektrode bezeichnet. Das Ableitelement ermöglicht aufgrund seiner dreidimensionalen porösen Metallstruktur eine im Vergleich zu den aus dem Stand der Technik bekannten organischen Lithium-Ionen Zellen sowie Lithium-SO₂-Zellen höhere Beladung der positiven Elektrode und verbessert den elektronisch leitenden Anschluss des eingearbeiteten Materials. Durch die Einarbeitung von porösem Material in die dreidimensionale poröse Metallstruktur wird die innere Oberfläche des Ableitelements und damit die Reaktionsfläche für die an der positiven Elektrode stattfindende Reduktions-Oxidations-Reaktion vergrößert.

### Positive Elektrode

Nachfolgend sind vorteilhafte Ausgestaltungen und Weiterbildungen einzelner oder aller Aspekte der Erfindung im Hinblick auf die positive Elektrode beschrieben:
Wie bereits zuvor beschrieben, kann in die dreidimensionale poröse Metallstruktur des Ableitelements zumindest ein Material eingearbeitet werden, welches die Oxidations-Reduktions-Reaktion des aktiven Elektrodendepolarisators an der positiven Elektrode katalysiert. In einer ersten vorteilhaften Ausgestaltung des dritten Aspektes der Erfindung enthält die poröse Metallstruktur des Ableitelements Kohlenstoff als Material. Der Kohlenstoff ist in der porösen Metallstruktur im Wesentlichen homogen verteilt. Somit wird der erforderliche elektronisch leitende Anschluss des Kohlenstoffs durch das Ableitelement ermöglicht. Die homogene Verteilung wird dadurch erreicht, dass der Kohlenstoff in die Poren der Metallstruktur gleichmäßig eingearbeitet wird. Die Menge an eingearbeiteten Kohlenstoff in die poröse Metallstruktur entspricht dabei der zuvor beschriebenen Beladung der positiven Elektrode. Die homogene Verteilung des Kohlenstoffs verbessert die elektrischen Leistungsdaten der wiederaufladbaren Batteriezelle weiter.

Es liegt hierbei im Rahmen aller Aspekte der Erfindung, dass die positive Elektrode der wiederaufladbaren Batteriezelle ein Ableitelement mit einer dreidimensionalen porösen Metallstruktur, insbesondere in Form eines Metallschaums, mit den zuvor genannten Merkmalen aufweisen kann.

Der Kohlenstoff der positiven Elektrode ist vorzugsweise ebenfalls porös und weist dadurch eine große spezifische Oberfläche auf. Die spezifische Oberfläche beträgt bevorzugt mindestens 200 m²/g, weiter bevorzugt mindestens 600 m²/g, weiter bevorzugt mindestens 1000 m²/g, weiter bevorzugt mindestens 1400 m²/g, weiter bevorzugt mindestens 1600 m²/g, und besonders bevorzugt mindestens 2000 m²/g. Eine Erhöhung der spezifischen Oberfläche des Kohlenstoffs führt zu einer Steigerung der Kapazität der wiederaufladbaren Batteriezelle und verbessert somit die Leistungsdaten der wiederaufladbaren Batteriezelle. Beispiele für das poröse Kohlenstoffmaterial sind Ruße. Zu diesen Rußen zählen Verbrennungsruße in Form von Flamm-, Gas- und Ofen-Ruße (sogenanntes "carbon black"), Spaltruß (sogenanntes "thermal black") und Aktivkohlenstoffe. Weitere Beispiele für das poröse Kohlenstoffmaterial sind aktivierte Kohlenstoffe, MesoCarbon MicroBeads (MCMB), Kohlenstoffnanoröhren (CNT), mehrwandige Kohlenstoffnanoröhren (MWCNT) und Graphen. Ebenso können als poröse Kohlenstoffmaterialien Naturgraphit, Kunstgraphit (Elektrographit), Graphit-Folien, Koks (Gaskoks, Hüttenkoks, Petrolkoks, Retortenkoks), ein Kohlenstoff-Fasermaterial (Glaskohlenstoff, Schaumkohlenstoff), Pyrokohlenstoff, Pyrographit, Aerographit, expandierter Graphit, Fullerene oder amorpher Kohlenstoff (graphitizable carbon and non-graphitizable carbon) verwendet werden.

Zur weiteren Steigerung der Kapazität der wiederaufladbaren Batteriezelle sieht eine weitere vorteilhafte Ausgestaltung der erfindungsgemäßen wiederaufladbaren Batteriezelle vor, dass die positive Elektrode, bezogen auf ihre Fläche, mindestens 2 mg/cm², bevorzugt mindestens 5 mg/cm², weiter bevorzugt mindestens 10 mg/cm², weiter bevorzugt mindestens 15 mg/cm², weiter bevorzugt mindestens 20 mg/cm², weiter bevorzugt mindestens 30 mg/cm², und besonders bevorzugt mindestens 50 mg/cm² Kohlenstoff und mögliche weitere Materialien enthält. Die maximale Beladung der positiven Elektrode sollte vorzugsweise 200 mg/cm² nicht überschreiten, weiter bevorzugt 150 mg/cm² und besonders bevorzugt 100 mg/cm².

Die positive Elektrode ist in einer weiteren vorteilhaften Ausgestaltung aller Aspekte der Erfindung porös. Die Porosität stellt das Verhältnis von Hohlraumvolumen zu Gesamtvolumen der positiven Elektrode dar, wobei das Hohlraumvolumen von sogenannten Poren bzw. Hohlräumen ausgebildet wird. Die Porosität führt zu einer Vergrößerung der inneren Oberfläche der positiven Elektrode. Die einzelnen Poren der positiven Elektrode können im Betrieb der wiederaufladbaren Batteriezelle vorzugsweise vollständig mit dem aktiven Elektrodendepolarisator gefüllt sein. Zur Aufnahme der aus dem aktiven Elektrodendepolarisator während des Entladens gebildeten festen Reaktionsprodukte ist eine hohe Porosität und eine damit verbundene große innere Oberfläche vorteilhaft. Die Porosität beträgt bevorzugt mindestens 50 %, weiter bevorzugt mindestens 60 %, weiter bevorzugt mindestens 70 %, weiter bevorzugt mindestens 80 %, weiter bevorzugt mindestens 90 %, weiter bevorzugt mindestens 95 % und besonders bevorzugt mindestens 97 %. Die Porosität verringert die Dichte der Elektroden und somit auch ihr Gewicht. Dies wirkt sich letztlich positiv auf das Gesamtgewicht der wiederaufladbaren Batteriezelle aus.

Zur Verbesserung der mechanischen Festigkeit enthält die positive Elektrode in einer weiteren vorteilhaften Ausgestaltung aller Aspekte der Erfindung zumindest ein Bindemittel. Dieses Bindemittel kann ein fluoriertes Bindemittel sein, insbesondere ein Polyvinylidenfluorid (PVDF) und/oder ein Terpolymer aus Tetrafluorethylen, Hexafluorpropylen und Vinylidenfluorid (THV). Weiterhin kann das Bindemittel aus einem Polymer ausgebildet sein, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Das Bindemittel kann auch aus einem Polymer ausgebildet sein, das auf monomeren Styrol- und Butadien-Struktureinheiten basiert. Das Bindemittel kann auch ein Bindemittel aus der Gruppe der Carboxyalkylcellulosen und deren Salze sein. Im Rahmen der Erfindung haben sich insbesondere THV und PVDF bewährt. Zumindest eines der zuvor genannten Bindemittel kann in der positiven Elektrode in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegen. Der Zusatz eines Bindemittels verbessert die Langzeitstabilität und die Lebensdauer der wiederaufladbaren Batteriezelle.

In einer weiteren vorteilhaften Ausgestaltung aller Aspekte der Erfindung enthält die positive Elektrode zusätzlich zum Kohlenstoff ein Metallhalogenid, z.B. ein Metallchlorid, ein Metallfluorid und ein Metallbromid. Als Metallchlorid kann die positive Elektrode beispielsweise Kupferchlorid (CuCl₂) enthalten. Derartige Metallhalogenide sind elektrochemisch aktive Materialien, welche während der Entladung reduziert und während des Ladevorgangs der wiederaufladbaren Batteriezelle oxidiert werden können. Der Gehalt des Metallhalogenids in der positiven Elektrode kann 20 Gew%, bevorzugt 40 Gew%, weiter bevorzugt 60 Gew% und besonders bevorzugt 80 Gew%, bezogen auf das Gesamtgewicht der Elektrode, betragen. Durch den Zusatz des Metallhalogenids, insbesondere des Metallchlorids können die Kapazitäts-Eigenschaften der positiven Elektrode verbessert werden.

### Negative Elektrode

Nachfolgend sind vorteilhafte Ausgestaltungen und Weiterbildungen aller Aspekte der Erfindung im Hinblick auf die negative Elektrode beschrieben.

Die negative Elektrode enthält in einer weiteren vorteilhaften Ausgestaltung der erfindungsgemäßen wiederaufladbaren Batteriezelle ein aktives Metall. Als aktives Metall der wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen, die direkt oder indirekt zur Abgabe von Elektronen in den externen Stromkreis oder zur Aufnahme von Elektronen aus dem externen Stromkreis führen. Dieses aktive Metall ist ein Alkalimetall, ein Erdalkalimetall, ein Metall der Gruppe 12 des Periodensystems der Elemente oder Aluminium. Es ist im geladenen Zustand der wiederaufladbaren Batteriezelle in der negativen Elektrode gespeichert.

Das aktive Metall der negativen Elektrode ist in einer weiteren vorteilhaften Ausgestaltung aller Aspekte der Erfindung Lithium, Natrium, Calcium, Zink oder Aluminium. Vorzugsweise ist die erfindungsgemäße wiederaufladbare elektrochemische Batteriezelle eine Alkalimetallzelle, bei der das aktive Metall der negativen Elektrode ein Alkalimetall, insbesondere Lithium ist.

Wird als aktives Metall Lithium verwendet, so wird dieses Lithium durch metallisches Lithium, eine Lithium enthaltende Legierung, eine Lithium enthaltende intermetallische Verbindung, ein Lithium enthaltendes Kohlenstoffmaterial, ein Lithium enthaltendes anorganisches Material oder dergleichen bereitgestellt. Das anorganische Material kann weiterhin mindestens ein Oxid, ein Sulfid, ein Phosphid, ein Nitrid und ein Fluorid einschließen. Ein Gehalt dieses negativen Elektrodenmaterials in der negativen Elektrode kann 20 bis 100 Gew% betragen.

Wenn beispielsweise das Leitsalz in dem auf SO₂-basierende Elektrolyten ein Alkalimetallsalz in Form eines Lithiumsalzes wie beispielsweise Lithiumtetrachloroaluminat (LiAlCl₄) ist, dann kann die negative Elektrode aus metallischem Lithium, aus einem Lithium enthaltenden Kohlenstoffmaterial, aus einer Lithium enthaltenden Legierung, einem Oxid oder einem Sulfid der folgenden Elemente Zinn, Silizium, Aluminium, Phosphor, Zink, Gallium, Germanium, Silber, Indium, Antimon oder Bismut bestehen.

Wird als aktives Metall Natrium verwendet, so kann als Material der negativen Elektrode metallisches Natrium, eine Natrium enthaltende Legierung, eine Natrium enthaltende intermetallische Verbindung, ein Natrium enthaltendes Kohlenstoffmaterial, ein Natrium enthaltendes anorganisches Material oder dergleichen verwendet werden. Das anorganische Material kann mindestens ein Oxid, ein Sulfid, ein Phosphid, ein Nitrid und ein Fluorid einschließen.

Eine weitere vorteilhafte Ausgestaltung der erfindungsgemäßen wiederaufladbaren Batteriezelle sieht vor, dass die Menge des aktiven Materials der negativen Elektrode, also die Beladung der Elektrode, bezogen auf ihre Fläche, mindestens 10 mg/cm², bevorzugt mindestens 20 mg/ cm², weiter bevorzugt mindestens 40 mg/ cm², weiter bevorzugt mindestens 60 mg/ cm², weiter bevorzugt mindestens 80 mg/ cm² und besonders bevorzugt mindestens 100 mg/ cm² beträgt. Diese Menge an aktivem Material der negativen Elektrode wirkt sich positiv auf den Ladevorgang sowie den Entladevorgang der wiederaufladbaren Batteriezelle aus.

In einer weiteren vorteilhaften Ausgestaltung der erfindungsgemäßen wiederaufladbaren Batteriezelle weist die negative Elektrode eine Dicke von mindestens 0,05 mm, bevorzugt mindestens 0,10 mm, bevorzugt mindestens 0,50 mm, bevorzugt mindestens 1,00 mm, weiter bevorzugt mindestens 1,50 mm, weiter bevorzugt mindestens 2,00 mm und besonders bevorzugt mindestens 2,50 mm auf. Die Dicke der negativen Elektrode der erfindungsgemäßen wiederaufladbaren Batteriezelle sollte vorzugweise jedoch einen maximalen Wert von 20,0 mm, bevorzugt von 15,0 mm nicht überschreiten.

Weiterhin weist die negative Elektrode vorzugsweise ein Ableitelement auf. Dieses Ableitelement der negativen Elektrode kann eine planare Struktur oder eine dreidimensionale poröse Metallstruktur in Form eines Metallschaums aufweisen. Das Ableitelement der negativen Elektrode dient ebenfalls dazu, den erforderlichen elektronisch leitenden Anschluss des aktiven Materials der negativen Elektrode zu gewährleisten und verbessert somit die Leistungsdaten der wiederaufladbaren Batteriezelle.

Es liegt im Rahmen der Erfindung, dass die negative Elektrode zur Verbesserung der mechanischen Festigkeit auch zumindest ein Bindemittel enthält. Dieses Bindemittel kann ein fluoriertes Bindemittel sein, insbesondere ein Polyvinylidenfluorid (PVDF) und/oder ein Terpolymer aus Tetrafluorethylen, Hexafluorpropylen und Vinylidenfluorid (THV). Weiterhin kann das Bindemittel aus einem Polymer ausgebildet sein, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Das Bindemittel kann auch aus einem Polymer ausgebildet sein, das auf monomeren Styrol- und Butadien-Struktureinheiten basiert. Das Bindemittel kann auch ein Bindemittel aus der Gruppe der Carboxyalkylcellulosen und deren Salze sein. Zumindest eines der zuvor genannten Bindemittel kann in der negativen Elektrode in einer Konzentration höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegen. Der Zusatz eines Bindemittels verbessert die Langzeitstabilität und die Lebensdauer der wiederaufladbaren Batteriezelle.

### Auf SO₂-basierender Elektrolyt

Nachfolgend sind vorteilhafte Ausgestaltungen und Weiterbildungen aller Aspekte der Erfindung im Hinblick auf den auf SO₂-basierenden Elektrolyten beschrieben.

Wie bereits zuvor erläutert, umfasst die erfindungsgemäße wiederaufladbare Batteriezelle einen auf SO₂-basierenden Elektrolyten, welcher SO₂ in einer Konzentration enthält, bei der die Beweglichkeit der Ionen des Leitsalzes, das in dem Elektrolyten enthalten ist und den Ladungstransport bewirkt, zumindest teilweise, größtenteils oder sogar vollständig durch das SO₂ gewährleistet ist. Der aktive Elektrodendepolarisator ist aus dem auf SO₂-basierenden Elektrolyten gebildet.

Eine weitere vorteilhafte Ausgestaltung der erfindungsgemäßen wiederaufladbaren Batteriezelle sieht vor, dass der Elektrolyt mindestens 0,5 Mol SO₂ und höchstens 20 Mol SO₂ bevorzugt mindestens 1,0 Mol SO₂ und höchstens 6,0 Mol SO₂ besonders bevorzugt mindestens 2,0 Mol SO₂ und höchstens 5,0 Mol SO₂ je Mol Leitsalz enthält. Auf SO₂-basierende Elektrolyten mit einem derartigen Konzentrationsverhältnis zwischen SO₂ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Es liegt hierbei im Rahmen der Erfindung, dass die Konzentration an SO₂ auch andere Werte annehmen kann. Die Konzentration an SO₂ im Elektrolyten wirkt sich auf dessen Leitfähigkeit und dessen Dampfdruck aus. Je nach Konzentration an SO₂ werden verschiedene Leitfähigkeitswerte erreicht. Somit kann durch die Wahl der SO₂-Konzentration die Leitfähigkeit des Elektrolyten an die geplante Verwendung der wiederaufladbaren Batteriezelle angepasst werden. Bevorzugt enthält der auf SO₂-basierende Elektrolyt mindestens 20 Gew% SO₂, bezogen auf die Gesamtmenge des in der wiederaufladbaren Batteriezelle enthaltenen Elektrolyten, wobei Werte von 25 Gew% SO₂, 30 Gew% SO₂ und 40 Gew% SO₂ weiter bevorzugt sind. Der Elektrolyt kann auch bis zu 75 Gew% SO₂, enthalten, wobei Maximalwerte von 65 Gew% SO₂ und 55 Gew% SO₂ in dieser Reihenfolge bevorzugt sind.

Der auf SO₂-basierende Elektrolyt enthält in einer weiteren vorteilhaften Ausgestaltung der erfindungsgemäßen wiederaufladbaren Batteriezelle ein Leitsalz, welches ausgewählt ist aus der Gruppe, die gebildet wird von einem Aluminat, Halogenid, Oxalat, Borat, Phosphat, Arsenat und Gallat eines Alkalimetalls oder Erdalkalimetalls. Das Leitsalz ist vorzugsweise ein Lithiumtetrahalogenoaluminat, besonders bevorzugt LiAlCl₄. Die Menge des Leitsalzes in dem auf SO₂-basierenden Elektrolyten kann bevorzugt mindestens 30 Gew% des Gewichts des Elektrolyten, weiter bevorzugt mindestens 35 Gew%, mindestens 40 Gew%, mindestens 45 Gew%, oder mindestens 50 Gew% betragen.

Zusätzlich zum Leitsalz enthält der auf SO₂-basierende Elektrolyt in einer weiteren vorteilhaften Ausgestaltung der erfindungsgemäßen wiederaufladbaren Batteriezelle ein Alkali- oder Erdalkalihalogenid oder Halogenid der Gruppen 11, 12 oder 13 des Periodensystems der Elemente als Additiv. Vorzugweise können neben diesem Halogenid auch weitere Salze in einer Konzentration von mindestens 2 Gew%, bevorzugt von mindestens 4 Gew%, weiter bevorzugt von mindestens 6 Gew%, weiter bevorzugt von mindestens 8 Gew%, weiter bevorzugt von mindestens 10 Gew% und besonders bevorzugt von mindestens 12 Gew% bezogen auf die Gesamtmenge des in der wiederaufladbaren Batteriezelle enthaltenen Elektrolyten, enthalten sein. Beispielsweise kann der Elektrolyt LiAlCl₄ als Leitsalz enthalten und zusätzlich noch freies Aluminiumchlorid (AlCl₃) als Additiv. Die Zugabe des Additivs erhöht die aus der wiederaufladbaren Batteriezelle entnehmbare Kapazität. Es liegt hierbei im Rahmen der Erfindung, dass das Additiv
- mit dem auf SO₂-basierenden Elektrolyten wechselwirkt bzw. reagiert oder
- in dem auf SO₂-basierenden Elektrolyten dissoziiert oder
- an den Elektrodenprozessen beteiligt ist oder
- aber auch chemisch unverändert in dem auf SO₂-basierenden Elektrolyten vorliegt.
Die Erfindung ist jedoch nicht hierauf beschränkt.

Die Menge von SO₂ und Leitsalz im Elektrolyten kann bevorzugt größer als 50 Gew%, weiter bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder besonders bevorzugt größer als 99 Gew% des Gewichts des Elektrolyten sein.

Es liegt im Rahmen der Erfindung, dass der auf SO₂-basierende Elektrolyt vorzugsweise einen nur geringen oder sogar gar keinen prozentualen Anteil an zumindest einem organischen Stoff oder einem organischen Material aufweist. Vorzugsweise kann der Anteil von organischen Stoffen oder Materialien im auf SO₂-basierenden Elektrolyten, welcher beispielsweise in Form eines oder mehrerer Lösungsmittel oder Zusatzstoffe vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der auf SO₂-basierende Elektrolyt frei von organischen Lösungsmitteln. Durch den nur geringen Anteil an organischen Stoffen oder Materialien oder sogar deren vollständige Abwesenheit ist der Elektrolyt entweder kaum oder gar nicht brennbar. Dies erhöht die Betriebssicherheit einer mit einem derartigen auf SO₂-basierenden Elektrolyten betriebenen wiederaufladbaren Batteriezelle.

Weiterhin kann der organische Stoff oder das organische Material vorzugsweise kein Additiv, sondern lediglich eine Verunreinigung sein. Derartige Verunreinigungen können beispielsweise durch eine kohlenstoffhaltige Umhüllung des aktiven Materials der positiven Elektrode oder von anderen kohlenstoffhaltigen Materialien, beispielsweise der negativen Elektrode, verursacht werden. Besonders bevorzugt ist der auf SO₂-basierende Elektrolyt im Wesentlichen frei von organischen Materialien. Der Begriff "im Wesentlichen" ist dahingehend zu verstehen, dass die Menge eventuell vorhandener organischer Stoffe oder Materialien so gering ist, dass sie keinerlei Sicherheitsrisiko darstellen. Dies bedeutet, dass der Elektrolyt vorzugsweise nicht mehr als 500 ppm an organischen Stoffen oder Materialien enthält.

### Separator

Es liegt im Rahmen aller Erfindungsaspekte, dass die wiederaufladbare Batteriezelle vorzugsweise einen Separator zur elektrischen Trennung der positiven und der negativen Elektrode aufweist. Dieser Separator kann aus einem Vlies, einer Membran, einem Gewebe, einem Gewirke, einem organischen Material, anorganischen Material oder aus einer Kombination hiervon ausgebildet ist. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert; z.B. PVDF, ETFE, PTFE), Polyestern, Polyamiden oder Polysulfonen bestehen. Separatoren, die eine Kombination von organischen und anorganischen Materialien darstellen, sind zum Beispiel Glasfaser-Textilmaterialien, bei denen die Glasfasern mit einer geeigneten polymeren Beschichtung, versehen sind. Die Beschichtung enthält vorzugsweise ein fluorhaltiges Polymer wie Polytetrafluorethylen (PTFE), Ethylen-Tetrafluorethylen (ETFE), Perfluorethylenpropylen (FEP), THV (Terpolymer aus Tetrafluorethylen, Hexafluorpropylen und Vinylidenfluorid) oder ein Perfluoralkoxy-Polymer (PFA) oder sie enthält ein Aminosilan, Polypropylen (PP) oder Polyethylen (PE).

Insbesondere durch die Kombination der zuvor beschriebenen positiven Elektrode und des flüssigen Elektrodendepolarisators kann eine wiederaufladbare Batteriezelle hergestellt werden, die folgende Verbesserungen aufweist:
- Die theoretisch berechnete Energiedichte der erfindungsgemäßen Batteriezelle mit Gehäuse beträgt ca. 1200 Wh/kg, bezogen auf das Gesamtgewicht der Batteriezelle. Davon sind mindestens 80 % praktisch nutzbar. Im Vergleich zu der von Duracell beschriebenen wiederaufladbaren Li-SO₂-Batteriezelle, welche eine Energiedichte von 134 Wh/kg aufweist, sind im vorliegenden Fall wesentlich höhere Energiedichten erreichbar.
- Es werden spezifische Entladekapazitäten von bis zu ca. 8000 mAh/g-Kohlenstoff erreicht. Das bedeutet, dass im Vergleich zu einer wiederaufladbaren Batteriezelle mit einer positiven Elektrode, welche Lithiumeisenphosphat als aktives Material enthält, eine wesentlich höhere Kapazität erreicht wird. Die spezifischen Entladekapazitäten sind auf die Beladung der positiven Elektrode mit Kohlenstoff bezogen.
- Die positiven Elektroden können im Vergleich zu den aus dem Stand der Technik bekannten Elektroden sehr dick sein. Dadurch werden weniger Elektroden innerhalb einer Zelle benötigt. Die Stromableitung und der Aufbau der Zelle werden vereinfacht.
- Die Selbstentladung der wiederaufladbaren Batteriezelle ist außerordentlich gering. Sie kann deshalb in geladenem Zustand lange Zeit gelagert und ohne erneutes Aufladen sofort verwendet werden.
- Der Energieinhalt der wiederaufladbaren Batteriezelle ist sehr hoch. Damit kann mehr Energie mit weniger Zellen bereitgestellt werden. Das senkt die Produktionskosten.
- Besteht die positive Elektrode aus Kohlenstoff, so können im Vergleich zu Elektroden, die z.B. aus teureren Alkalimetalloxiden oder -phosphaten ausgebildet sind, Produktionskosten eingespart werden.
- Die wiederaufladbare Batteriezelle weist aufgrund der Porosität der positiven Elektrode ein geringeres Gesamtgewicht auf.

Weitere vorteilhafte Eigenschaften der Erfindung werden nachfolgend anhand von Figuren, Beispielen und Experimenten näher beschrieben und erläutert.
- Figur 1:: zeigt ein Ausführungsbeispiel einer erfindungsgemäßen wiederaufladbaren Batteriezelle in einer Querschnittdarstellung;
- Figur 2:: zeigt eine elektronenmikroskopische Aufnahme der dreidimensionalen porösen Struktur des Metallschaums des Ableitelements;
- Figur 3:: zeigt die Entladekapazität in Abhängigkeit von der Anzahl der Ladeund Entladezyklen einer positiven Elektrode in einem ersten Halbzellenexperiment gemäß Experiment 1;
- Figur 4:: zeigt zwei Entladekurven von positiven Elektroden in einem zweiten Halbzellenexperiment gemäß Experiment 2;
- Figur 5:: zeigt die Entladekapazität in Abhängigkeit von der Anzahl der Ladeund Entladezyklen der positiven Elektroden aus Experiment 2 im Vergleich zu positiven Elektroden mit einem Katalysator in einem dritten Halbzellenexperiment gemäß Experiment 3;
- Figur 6:: zeigt die Entladekurven von positiven Elektroden mit verschiedenen Dicken und Beladungen in einem vierten Halbzellenexperiment gemäß Experiment 4;
- Figur 7:: zeigt die Entladekurven von positiven Elektroden mit verschiedener Porosität in einem fünften Halbzellenexperiment gemäß Experiment 5;
- Figur 8:: zeigt die Entladekapazität in Abhängigkeit von der spezifischen Oberfläche des verwendeten Kohlenstoffs der positiven Elektroden in einem ersten Halbzellenexperiment in einem sechsten Halbzellenexperiment gemäß Experiment 6; und
- Figur 9:: zeigt die Entladekurven für Elektrolyten mit unterschiedlichen SO₂-Konzentration in einem siebten Halbzellenexperiment gemäß Experiment 7.

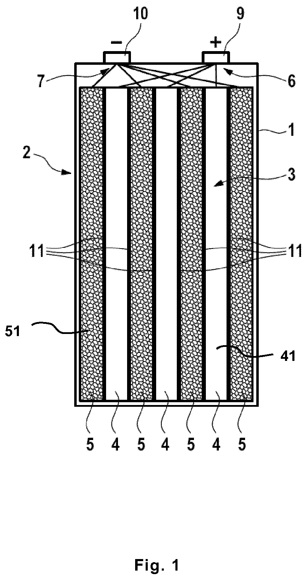

Figur 1 zeigt ein Ausführungsbeispiel einer erfindungsgemäßen wiederaufladbaren Batteriezelle in Querschnittdarstellung. Diese wiederaufladbare Batteriezelle ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Im vorliegenden Ausführungsbeispiel enthalten die positiven Elektroden 4 der wiederaufladbaren Batteriezelle porösen Kohlenstoff in Form von aktiviertem Kohlenstoff. Die negativen Elektroden 5 sind aus metallischem Lithium ausgebildet.

Das Gehäuse 1 kann auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der Batteriezelle verbunden. Die wiederaufladbare Batteriezelle ist derart mit einem flüssigen aktiven Elektrodendepolarisator, welcher aus einem auf SO₂-basierenden Elektrolyten ausgebildet ist, gefüllt, dass er annähernd vollständig in sämtliche Poren bzw. Hohlräume der positiven Elektroden 4, 5 eindringt. Der flüssige aktive Elektrodendepolarisator ist in Figur 1 nicht sichtbar. Er hat im vorliegenden Ausführungsbeispiels eine Zusammensetzung aus LiAlCl₄ * 1,5 SO₂.

Die Elektroden 4, 5 sind im vorliegenden Ausführungsbeispiel flächig ausgebildet, d.h. als Schichten mit einem im Verhältnis zu ihrer Flächenausdehnung geringen Dicke. Die Elektroden 4, 5 können - wie in Figur 1 dargestellt - ungefähr dieselben Dicken besitzen, sie können jedoch auch unterschiedliche Dicken aufweisen. So kann zum Beispiel die negative Elektrode 5 eine geringere Dicke als die positive Elektrode 4 aufweisen.

Die Elektroden 4, 5 sind jeweils durch Separatoren 11 voneinander getrennt. Diese Separatoren 11 sind im vorliegenden Ausführungsbeispiel aus einem Glasfaser-Textilmaterial ausgebildet. Das Gehäuse 1 der dargestellten wiederaufladbaren Batteriezelle ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind.

Die wiederaufladbare Batteriezelle kann jedoch auch als Wickelzelle ausgebildet sein. Bei einer Wickelzelle bestehen die Elektroden aus dünnen Lagen, die zusammen mit einem Separatormaterial aufgewickelt vorliegen. Das Separatormaterial trennt die positive Elektrode und die negative Elektrode räumlich und elektrisch, ist jedoch aber unter anderem für die Ionen des aktiven Metalls durchlässig. Auf diese Weise entstehen große elektrochemisch wirksame Oberflächen, die eine entsprechend hohe Stromausbeute ermöglichen.

Weiterhin kann die wiederaufladbare Batteriezelle auch in Bobbintechnik aufgebaut sein. In diesem Fall befindet sich eine sehr dicke poröse positive Elektrode im Inneren eines Batteriegehäuses und nimmt dabei den Großteil des Volumens ein. Je nachdem ob, das Gehäuse rund oder quaderförmig ausgebildet ist, werden eine oder mehrere negative Elektroden verwendet. Diese sind zwischen der Gehäusewand und der dicken positiven Elektrode platziert. Die Elektroden werden durch einen Separator elektrisch voneinander getrennt. Der Elektrolyt ist in den Hohlräumen und Poren innerhalb des Gehäuses verteilt.

Die Elektroden 4, 5 weisen weiterhin Ableitelemente 41, 51 auf, welche dazu dienen, den erforderlichen elektronisch leitenden Anschluss des aktiven Materials der jeweiligen Elektrode 4, 5 zu ermöglichen. Diese Ableitelemente 41, 51 stehen in Kontakt zu dem an der Elektrodenreaktion der jeweiligen Elektrode 4, 5 beteiligten aktiven Materialien. Das Ableitelement 41 der positiven Elektrode 4 ist in Form eines porösen Metallschaums ausgebildet. Dieser Metallschaum erstreckt sich über die Dickendimension der Elektrode 4. Das Kohlenstoffmaterial wurde in die Poren dieses Metallschaums eingearbeitet.

Bei der Herstellung der positiven Elektroden 4 wird das Kohlenstoffmaterial derart in die poröse Struktur des Ableitelementes 41 eingearbeitet, dass es dessen Poren über die gesamte Dicke der Metallstruktur gleichmäßig füllt. Danach wird das so erzeugte Elektrodenmaterial unter hohem Druck gepresst.

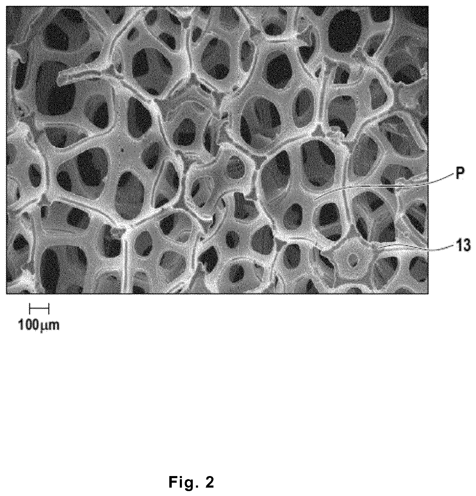

Figur 2 zeigt eine elektronenmikroskopische Aufnahme der dreidimensionalen porösen Struktur des (ungefüllten) Metallschaums 13 des Ableitelements 41. Anhand des angegebenen Maßstabes erkennt man, dass die Poren P im Mittel einen Durchmesser von mehr als 100 µm haben, also verhältnismäßig groß sind.

Der poröse Metallschaum 13 des Ableitelementes 41 erstreckt sich im vorliegenden Ausführungsbeispiel über 90 % der gesamten Dicke d des Ableitelements 41. Der Kohlenstoff der positiven Elektrode 4 ist in dem poröse Metallschaum 13 im Wesentlichen homogen verteilt, so dass die Zellfunktion durch eventuelle Abweichungen der homogenen Verteilung nur geringfügig beeinträchtigt wird. Zur Verbesserung der mechanischen Festigkeit enthält die positive Elektrode 4 zudem ein Bindemittel. Bei diesem Bindemittel handelt es sich um THV.

### Beispiel 1: Herstellung der positiven Elektrode

Die Herstellung der positiven Elektrode wurde - wie im Nachfolgenden beschrieben - durchgeführt:
Zunächst wurde aus folgenden Komponenten:
ca. 92 - 96 Gew% Kohlenstoff in Form von "High Surface Carbon"
ca. 4 - 8 Gew% fluoriertes Bindemittel
eine Paste hergestellt. Hierfür wurde zunächst das fluorierte Bindemittel in einem Lösungsmittel gelöst. Danach wurde Kohlenstoff im Wechsel mit weiterem Lösungsmittel ebenfalls unter Rühren hinzugefügt. Die hergestellte Paste wurde homogen in eine dreidimensionale poröse Metallstruktur eines Ableitelements, welche in Form eines Metallschaums vorliegt und eine Ausgangsporosität von mehr als 90 % aufweist, eingebracht und eine Stunde bei 50° C getrocknet bzw. getempert, wodurch sich das Elektrodenmaterial bildete. Nach dem Abkühlen wurde dieses Elektrodenmaterial, das heißt der in dem Metallschaum homogen eingebrachte Kohlenstoff, mittels eines Kalanders, ausgehend von einer Ausgangsdicke von 1,6 mm, auf eine Dicke von 0,5 mm zusammengepresst. Aus diesem gepressten und getemperten Elektrodenmaterial wurden Stücke mit einer Fläche von 1 cm² ausgestanzt, um die positive Elektrode zu erhalten. Die positive Elektrode hatte eine Beladung mit Kohlenstoff von ca. 3 mg/cm².

Die positive Elektrode wurde in den nachfolgend beschriebenen Experimenten als zu untersuchende Elektrode, d.h. als sogenannte Arbeitselektrode eingesetzt. Sie wurde in einer Halbzelle mit Drei-Elektroden-Anordnung untersucht, wobei die Bezugs- und die Gegenelektrode jeweils aus metallischem Lithium ausgebildet waren. Der in der Halbzelle verwendete auf SO₂-basierende Elektrolyt hatte die Zusammensetzung LiAlCl4 * 1,5 SO₂.

### Experiment 1

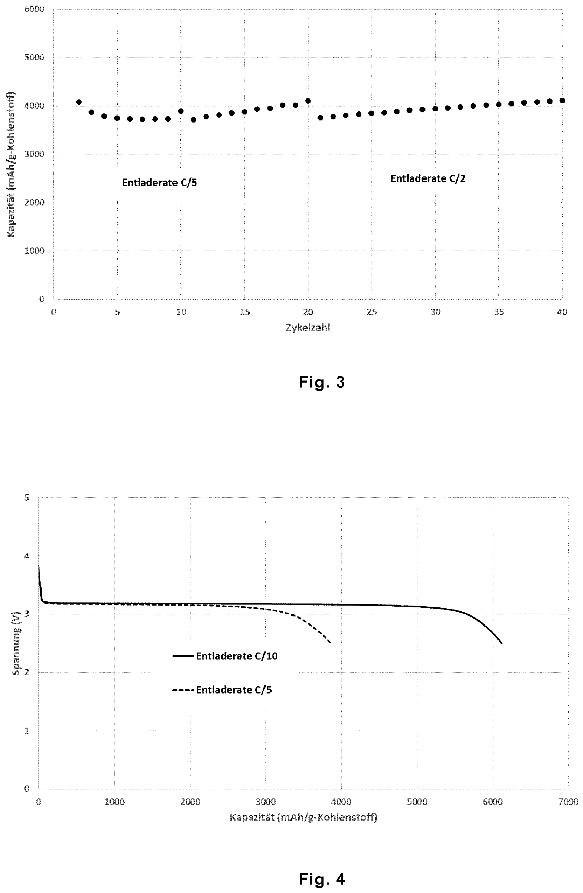

In einem ersten Experiment wurde mit positiven Elektroden, welche gemäß dem in Beispiel 1 beschriebenen Verfahren hergestellt wurden, die Kapazität einer Halbzelle in Abhängigkeit von der Anzahl der Lade- und Entladezyklen bestimmt. Diese Halbzelle wies die zuvor beschriebene Drei-Elektroden-Anordnung auf, welche in den auf SO₂-basierenden Elektrolyten mit der zuvor genannten Zusammensetzung eingetaucht war. Figur 3 zeigt die Kapazität der Halbzelle als Funktion der Zykelzahl. Die Zykelzahl stellt die Anzahl der wiederholt durchgeführten Lade- und Entladevorgänge dar. Die Halbzelle wurde zunächst mit einer Lade- bzw. Entladerate von C/10 formiert. Diese Formierungszyklen sind nicht dargestellt. Unter dem Begriff Formierungszyklen sind die Initialzyklen der Halbzelle zu verstehen, bevor die eigentliche Messung beginnt. Nach diesen Formierungszyklen erfolgten die Entladungen der Halbzelle zunächst mit einer Entladerate von C/5 für 20 Zyklen, danach wurden weitere 20 Zyklen mit einer Entladerate von C/2 durchgeführt. Mit einer Entladerate von 1 C wird definitionsgemäß die Nennkapazität einer Zelle in einer Stunde entladen, woraus sich der Entladestrom entsprechend ermitteln lässt. Die in Figur 3 dargestellten Kapazitäten wurden auf die Menge an Kohlenstoff, die in der jeweiligen positiven Elektrode in Gramm enthalten war, normiert.

Aus Figur 3 ist zu entnehmen, dass die Halbzelle eine Entladekapazität von ca. 4000 mAh/g-Kohlenstoff über 40 Zyklen zeigt. Die Erhöhung der Entladerate von C/5 zu C/2 ändert die Kapazitätsausbeute nicht. Das zeigt die hohen Kapazitäten, die einer erfindungsgemäßen wiederaufladbaren Batteriezelle entnommen werden können.

### Experiment 2

In einem zweiten Halbzellenexperiment wurde eine gemäß Beispiel 1 hergestellte positive Elektrode mit einer Entladerate von C/5 und einer Entladerate von C/10 beginnend bei einer Spannung von 3,85 Volt bis zu einer Entladeschlussspannung von 2,5 Volt entladen. Figur 4 zeigt die Spannung in Volt (V) als Funktion der Kapazität und somit die erhaltenen Entladekurven der Halbzelle. Mit einer Entladerate von C/5 wird eine Kapazität von ca. 4000 mAh/g-Kohlenstoff erreicht. Das entspricht den Werten aus dem zuvor beschriebenen Experiment 1. Bei der geringeren Entladerate von C/10 werden jedoch Kapazitätswerte von ca. 6500 mAh/g-Kohlenstoff erreicht. Die Hochenergiefähigkeit der erfindungsgemäßen wiederaufladbaren Batteriezelle wird in diesem Experiment 2 eindrucksvoll gezeigt.

### Experiment 3

In einem dritten Halbzellenexperiment wurde der Einfluss eines Katalysators auf die Kapazitätsausbeute untersucht. Hierzu wurde ein zusätzlicher Katalysator in die positive Elektrode eingearbeitet. Bei dem Katalysator handelte es sich um Vanadiumoxid (V₂O₅). Die positive Elektrode mit V₂O₅ als Katalysator wurden analog zum Beispiel 1 hergestellt, mit dem Unterschied, dass folgende Zusammensetzung als Elektrodenmaterial verwendet wurde:

| | |
|---|---|
| ca. 90 - 94 Gew% | Kohlenstoff in Form von High surface carbon |
| ca. 2 - 6 Gew% | fluoriertes Bindemittel |
| ca. 4 Gew% | V₂O₅ |

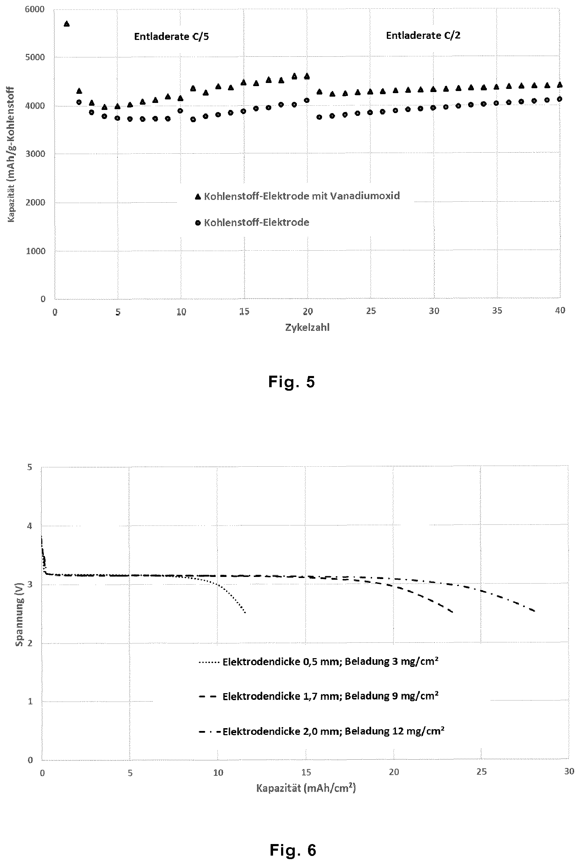

Mit dieser positiven Elektrode wurden die gleichen Halbzellenexperimente - wie in Experiment 1 beschrieben - durchgeführt. Figur 5 zeigt die Kapazität in Abhängigkeit von der Anzahl der Lade- und Entladezyklen für die positiven Elektroden ohne Katalysator aus Experiment 1 sowie für die positiven Elektroden mit Katalysator. Deutlich zu sehen ist, dass eine bessere Kapazitätsausbeute erzielt werden kann, wenn V₂O₅ als Katalysator in der positiven Elektrode eingesetzt wird. Im Durchschnitt werden um 300 mAh - 400 mAh/g-Kohlenstoff höhere Kapazitäten für positive Elektroden mit Katalysator erreicht.

### Experiment 4

In einem vierten Halbzellenexperiment 4 wurden der Einfluss der Dicke der positiven Elektrode sowie deren Beladung mit Kohlenstoff pro cm² Elektrodenfläche auf die Kapazität untersucht. Tabelle 1 zeigt die für das Halbzellenexperiment 4 verwendeten Dicken und Beladungen der positiven Elektroden sowie die im Halbzellenexperiment 4 erhaltenen Kapazitäten.

Die positive Elektrode 1 wurde gemäß Beispiel 1 hergestellt. Für die positiven Elektroden 2 und 3 wurde ein dickerer Metallschaum und ein fluorierter und/oder ein Bindemittel auf der Basis von Carboxyalkylcellulosen in den in Beispiel 1 gezeigten Gewichtsprozenten verwendet. Diese positiven Elektroden 1, 2 und 3 wurden mit einer Entladerate von C/5 beginnend bei einer Spannung von 3,85 Volt bis zu einer Entladeschlussspannung von 2,5 Volt entladen. Zum besseren Vergleich wurden hier die Kapazitäten auf eine Elektrodenfläche von 1 cm² normiert. Figur 6 zeigt die Ergebnisse der verschiedenen positiven Elektroden 1, 2 und 3. Zusätzlich sind in Tabelle 1 die erreichten Kapazitäten in mAh/cm² aufgeführt.

**Tabelle 1: Kenndaten der verwendeten positiven Elektroden**

| Positive Elektrode | Dicke [mm] | Beladung [mg/cm²] | Kapazität [mAh/cm²] |
|---|---|---|---|
| 1 | 0,5 | 3 | 11,5 |
| 2 | 1,7 | 9 | 23,4 |
| 3 | 2,0 | 12 | 28,2 |

Die positive Elektrode 1 zeigt bei einer geringen Beladung und Dicke eine Kapazität von 11,5 mAh/cm². Bei einer Erhöhung der Dicke und Beladung, wie im Fall der Elektroden 2 und 3, werden wesentlich erhöhte Kapazitätswerte erreicht.

### Experiment 5

In einem fünften Halbzellenexperiment 5 wurden der Einfluss der Porosität der positiven Elektrode auf die Kapazität untersucht. Tabelle 2 zeigt die für das Halbzellenexperiment 5 verwendeten Dicken und Beladungen der positiven Elektroden sowie die im Halbzellenexperiment 5 erhaltenen Kapazitäten. Es wurde die Elektrode 3 aus Experiment 4 verwendet.

**Tabelle 2: Kenndaten der verwendeten positiven Elektroden**

| Elektrode | Dicke [mm] | Beladung [mg/cm²] | Kapazität [mAh/g-Kohlenstoff] |
|---|---|---|---|
| 3 | 2,0 | 12 | 2348 |
| 4 | 4,0 | 12 | 3398 |

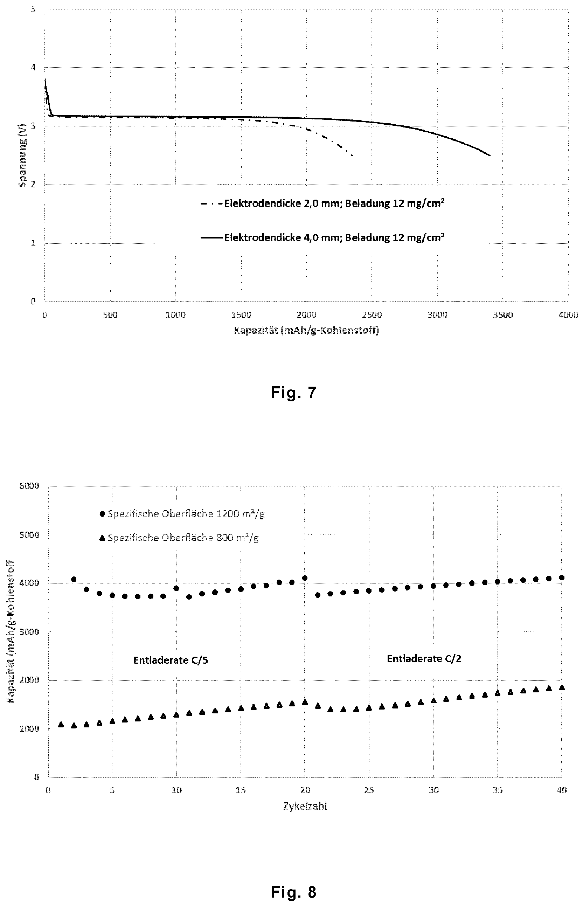

Für die positiven Elektroden 3 und 4 wurde unterschiedlich dicke Metallschäume mit der gleichen Menge an Kohlenstoff pro cm² befüllt. Zusätzlich wurde ein fluorierter und/oder ein Bindemittel auf der Basis von Carboxyalkylcellulosen in den in Beispiel 1 gezeigten Gewichtsprozenten zur Herstellung der Elektrodenverwendet. Durch die Verwendung unterschiedlich dicker Metallschäume mit der gleichen Beladung von 12 mg/cm² wurden Elektroden unterschiedlicher Porosität erhalten. Die dickere Elektrode 4 hat eine größere Porosität im Vergleich zur dünneren Elektrode 3. Diese positiven Elektroden 3 und 4 wurden mit einer Entladerate von C/5 beginnend bei einer Spannung von 3,85 Volt bis zu einer Entladeschlussspannung von 2,5 Volt entladen, vgl. Figur 7.

Hierbei ist auffallend, dass bei einer Erhöhung der Dicke bei gleichbleibender Beladung eine enorme Steigerung der Kapazitätswerte erreicht wird. Die Verwendung eines Metallschaums, also eines Ableitelements mit einer dreidimensionalen porösen Metallstruktur, ist wesentlich für diese Ergebnisse. Zum einen wird die Herstellung dicker positiver Elektroden mit einem ausreichenden elektronischen Kontakt zum äußeren Stromkreislauf ermöglicht. Zum anderen wird eine hohe Porosität erreicht, die dem aktiven Elektrodendepolarisator viel Raum zur Reaktion und Bildung von Entladeprodukten gibt.

### Experiment 6

Zur Untersuchung des Einflusses der spezifischen Oberfläche des verwendeten Kohlenstoffs wurden zwei verschiedene positive Elektroden gemäß Beispiel 1 hergestellt. Dabei wurden jeweils Kohlenstoff mit einer spezifischen Oberfläche von 800 m²/g bzw. 1200 m²/g verwendet. In einem Halbzellenexperiment wurden für jede positive Elektrode die jeweilige Kapazität in Abhängigkeit von der Anzahl der Lade- und Entladezyklen bestimmt (vgl. Figur 8). Die Halbzellen wurden mit einer Lade- bzw. Entladerate von C/10 formiert. Die Formierungszyklen sind nicht dargestellt. Die Entladungen erfolgten zunächst mit einer Entladerate von C/5 für 20 Zyklen, danach wurden weitere 20 Zyklen mit einer Entladerate von C/2 durchgeführt. Wie aus Figur 8 deutlich erkennbar ist, ist die Kapazität der positiven Elektrode mit der größeren spezifischen Oberfläche von 1200 m²/g wesentlich höher im Vergleich zur positiven Elektrode mit der geringeren spezifischen Oberfläche von 800 m²/g.

### Experiment 7

In einem weiteren Halbzellenexperiment wurde die Abhängigkeit der erreichbaren Kapazitäten von dem in dem auf SO₂-basierenden Elektrolyten verwendeten Gehalt an SO₂ untersucht. Es wurden fünf verschiedenen Elektrolyte der Zusammensetzung LiAlCl₄ * x SO₂ hergestellt. Die x-Werte betrugen 1,0, 1,5, 2,0, 2,5 und 3,0. Die im Experiment 7 verwendeten Elektrolyte sowie die erreichten Kapazitäten sind in Tabelle 3 zusammengefasst.

**Tabelle 3: In Experiment 7 verwendete Elektrolyte**

| Nr. | Elektrolyt | Kapazität [mAh/g-Kohlenstoff] |
|---|---|---|
| 1 | LiAlCl₄ * 1,0 SO₂ | 3095 |
| 2 | LiAlCl₄ * 1,5 SO₂ | 4070 |
| 3 | LiAlCl₄ * 2,0 SO₂ | 4475 |
| 4 | LiAlCl₄ * 2,5 SO₂ | 3735 |
| 5 | LiAlCl₄ * 3,0 SO₂ | 1950 |

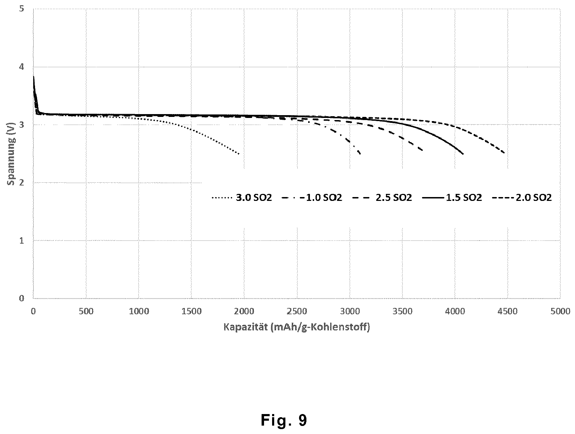

In einem Halbzellenexperiment wurde eine gemäß Beispiel 1 hergestellte positive Elektrode mit einer Entladerate von C/5 beginnend bei einer Spannung von 3,85 Volt bis zu einer Entladeschlussspannung von 2,5 Volt im jeweiligen Elektrolyten entladen. Figur 9 zeigt die erhaltenen Entladekurven. Die erhaltenen Kapazitäten sind, wie bereits zuvor erwähnt, in Tabelle 3 zusammengefasst. Erstaunlicherweise ist keine Erhöhung der Kapazität mit steigendem SO₂-Gehalt zu beobachten, sondern es ergibt sich eine optimale Konzentration bei einem SO₂-Gehalt von 2,0 mol SO₂ pro mol Leitsalz. Bei dieser SO₂-Konzentration werden Kapazitäten von fast 4500 mAh/g-Kohlenstoff erreicht. Bei einer Verringerung oder Erhöhung des Schwefeldioxidgehalts verringern sich die Kapazitätswerte wieder.

### Experiment 8

Weiterhin wurde in einem achten Halbzellenexperiment 8 der Zusatz eines Additivs, welches dem auf SO₂-basierenden Elektrolyten zugesetzt wurde, untersucht. Als Additiv wurde AlCl₃ verwendet. Es wurde ein Elektrolyt der Zusammensetzung LiAlCl₄ * 1,5 SO₂ hergestellt. Zu drei Proben dieses Elektrolyts wurde jeweils AlCl₃ in den Konzentrationen 4 Gew%, 8 Gew% und 12 Gew% bezogen auf das Gesamtgewicht des Elektrolyten zugegeben. In einem weiteren Halbzellenexperiment wurde eine gemäß Beispiel 1 hergestellte positive Elektrode mit einer Entladerate von C/10 beginnend bei einer Spannung von 3,85 Volt bis zu einer Entladeschlussspannung von 2,5 Volt im jeweiligen Elektrolyten entladen. Es wurden zwei Entladungen durchgeführt. Die für die jeweiligen Elektrolyten erhaltenen Kapazitäten für die Entladezyklen 1 und 2 sind Tabelle 4 zu entnehmen.

**Tabelle 4: In Experiment 8 verwendete Elektrolyte**

| Nr. | Elektrolyt LiAlCl₄ * 1,5 SO₂ mit x Gew% AlCl₃ | Kapazität [mAh/g-Kohlenstoff] 1. Entladezyklus | Kapazität [mAh/g-Kohlenstoff] 2. Entladezyklus |
|---|---|---|---|
| 1 | x = 4 | 11300 | 6250 |
| 2 | x = 8 | 12035 | 8370 |
| 3 | x = 12 | 33975 | 13475 |

Wie anhand von Tabelle 4 ersichtlich ist, nimmt mit höherer Konzentration an AlCl₃ die entnehmbare Kapazität zu. Im ersten Zyklus wird bei einer Konzentration von 12 Gew% AlCl₃ eine Kapazität von annähernd 34000 mAh/g-Kohlenstoff erreicht. Im Vergleich zu dem zuvor beschriebenen Experiment 2, in welchem bei einer Entladerate von C/10 und einem Elektrolyten ohne Additiv eine Kapazität von 6500 mAh/g-Kohlenstoff erreicht wurde, sind in diesem Fall im ersten Zyklus fast sieben Mal höhere Kapazitätswerte zu sehen. Auch in einem zweiten Entladezyklus wurde noch die doppelte Kapazität erreicht.

## Patentansprüche

1. Wiederaufladbare Batteriezelle mit einem Gehäuse (1), zumindest einer positiven Elektrode (4), zumindest einer negativen Elektrode (5) und einem aktiven Elektrodendepolarisator, welcher aus einem auf Schwefeldioxid-basierenden Elektrolyten gebildet ist,
**dadurch gekennzeichnet,**
**dass** die positive Elektrode (4) Kohlenstoff enthält und
eine Dicke von mindestens 0,2 mm, bevorzugt mindestens 0,4 mm, weiter bevorzugt mindestens 0,6 mm, weiter bevorzugt mindestens 0,8 mm, weiter bevorzugt mindestens 1,0 mm, weiter bevorzugt mindestens 1,5 mm, weiter bevorzugt mindestens 2,0 mm und besonders bevorzugt mindestens 4,0 mm aufweist.

2. Wiederaufladbare Batteriezelle mit einem Gehäuse (1), zumindest einer positiven Elektrode (4), zumindest einer negativen Elektrode (5) und einem aktiven Elektrodendepolarisator, welcher aus einem auf Schwefeldioxid-basierenden Elektrolyten gebildet ist,
**dadurch gekennzeichnet,**
**dass** die positive Elektrode (4) Kohlenstoff und mindestens ein weiteres chemisches Element oder mindestens eine das chemische Element enthaltende Verbindung in Form eines Metalloxids umfasst, wobei das chemische Element ausgewählt ist aus der Gruppe, die gebildet wird von Vanadium, Nickel, Kupfer, Magnesium, Mangan, Titan, Aluminium, Blei, Palladium, Wolfram und Chrom, und
wobei das weitere chemische Element oder die das chemische Element enthaltende Verbindung in einer Konzentration von 1 bis 20 Gew%, bevorzugt 5 bis 15 Gew% bezogen auf das Gesamtgewicht des Kohlenstoffs der Elektrode vorliegt.

3. Wiederaufladbare Batteriezelle mit einem Gehäuse (1), zumindest einer positiven Elektrode (4), zumindest einer negativen Elektrode (5) und einem aktiven Elektrodendepolarisator, welcher aus einem auf Schwefeldioxid-basierenden Elektrolyten gebildet ist,
**dadurch gekennzeichnet,**
**dass** die positive Elektrode (4) ein Ableitelement (41) mit einer dreidimensionalen porösen Metallstruktur, insbesondere in Form eines Metallschaums, aufweist, wobei sich die poröse Metallstruktur über mindestens 70 %, jedoch vorzugsweise über mindestens 80 % und weiter bevorzugt über mindestens 90% der Dicke der positiven Elektrode erstreckt.

4. Wiederaufladbare Batteriezelle nach Anspruch 3,
**dadurch gekennzeichnet,**
**dass** die poröse Metallstruktur des Ableitelements (41) Kohlenstoff enthält, welcher in der porösen Metallstruktur im Wesentlichen homogen verteilt ist.

5. Wiederaufladbare Batteriezelle nach einem der Ansprüche 1 bis 4,
**dadurch gekennzeichnet,**
**dass** die Menge des Kohlenstoffs der positiven Elektrode (4), bezogen auf ihre Fläche, mindestens 2 mg/cm², bevorzugt mindestens 5 mg/cm², weiter bevorzugt mindestens 10 mg/cm², weiter bevorzugt mindestens 15 mg/cm², weiter bevorzugt mindestens 20 mg/cm², weiter bevorzugt mindestens 30 mg/cm², und besonders bevorzugt mindestens 50 mg/cm² beträgt.

6. Wiederaufladbare Batteriezelle nach einem der Ansprüche 1 bis 5,
**dadurch gekennzeichnet,**
**dass** die positive Elektrode porös ist, wobei die Porosität der positiven Elektrode bevorzugt mindestens 50 %, weiter bevorzugt mindestens 60 %, weiter bevorzugt mindestens 70 %, weiter bevorzugt mindestens 80 %, weiter bevorzugt mindestens 90 %, weiter bevorzugt mindestens 95 % und besonders bevorzugt mindestens 97 % beträgt.

7. Wiederaufladbare Batteriezelle nach einem der Ansprüche 1 bis 6,
**dadurch gekennzeichnet,**
**dass** die positive Elektrode (4) ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist,
oder ein Bindemittel, welches aus einem Polymer besteht, das auf monomeren Styrol- und Butadien-Struktureinheiten basiert,
oder ein Bindemittel aus der Gruppe der Carboxymethylcellulosen enthält, wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegt.

8. Wiederaufladbare Batteriezelle nach einem der Ansprüche 1 bis 7,
**dadurch gekennzeichnet,**
**dass** der auf Schwefeldioxid-basierende Elektrolyt ein Leitsalz enthält, welches ausgewählt ist aus der Gruppe, die gebildet wird von einem Aluminat, einem Halogenid, einem Oxalat, einem Borat, einem Phosphat, einem Arsenat und einem Gallat eines Alkalimetalls oder eines Erdalkalimetalls, wobei das Leitsalz vorzugsweise ein Lithiumtetrahalogenoaluminat, besonders bevorzugt ein Lithiumtetrachloroaluminat ist.

9. Wiederaufladbare Batteriezelle nach einem der Ansprüche 1 bis 8,
**dadurch gekennzeichnet,**
**dass** der auf Schwefeldioxid-basierende Elektrolyt mindestens 0,5 Mol SO₂ und höchstens 20 Mol SO₂ bevorzugt mindestens 1,0 Mol SO₂ und höchstens 6,0 Mol SO₂ besonders bevorzugt mindestens 2,0 Mol SO₂ und höchstens 5,0 Mol SO₂ je Mol Leitsalz enthält.

10. Wiederaufladbare Batteriezelle nach einem der Ansprüche 1 bis 9,
**dadurch gekennzeichnet,**
**dass** der auf Schwefeldioxid-basierende Elektrolyt ein Alkali- oder Erdalkalihalogenid oder Halogenid der Gruppen 11, 12 oder 13 des Periodensystems der Elemente enthält.

11. Wiederaufladbare Batteriezelle nach einem der Ansprüche 1 bis 10,
**dadurch gekennzeichnet,**
**dass** die negative Elektrode (5) ein aktives Metall enthält, welches ein Alkalimetall, ein Erdalkalimetall, ein Metall der Gruppe 12 des Periodensystems der Elemente oder Aluminium ist.

12. Wiederaufladbare Batteriezelle nach Anspruch 11,
**dadurch gekennzeichnet,**
**dass** das aktive Metall der negativen Elektrode (5) Lithium, Natrium, Calcium, Zink oder Aluminium ist.

13. Wiederaufladbare Batteriezelle nach einem der Ansprüche 1 bis 12,
**dadurch gekennzeichnet,**
**dass** eine Menge des aktiven Materials der negativen Elektrode (5), bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm² beträgt.

14. Wiederaufladbare Batteriezelle nach einem der Ansprüche 1 bis 13,
**dadurch gekennzeichnet,**
**dass** die negative Elektrode (5) eine Dicke von mindestens 0,05 mm, bevorzugt mindestens 0,10 mm, bevorzugt mindestens 0,50 mm, bevorzugt mindestens 1,00 mm, weiter bevorzugt mindestens 1,50 mm, weiter bevorzugt mindestens 2,00 mm und besonders bevorzugt mindestens 2,50 mm aufweist.
